Europäisches Patentamt

European Patent Office

Office européen des brevets

(11) Veröffentlichungsnummer: **0 349 822**

**A2**

(12) # EUROPÄISCHE PATENTANMELDUNG

(21) Anmeldenummer: 89111160.1

(22) Anmeldetag: 20.06.89

(51) Int. Cl.⁴ **G11B 23/087**

(30) Priorität: 02.07.88 DE 8808498 U

(43) Veröffentlichungstag der Anmeldung:
10.01.90 Patentblatt 90/02

(84) Benannte Vertragsstaaten:
BE DE FR GB IT NL

(71) Anmelder: **Agfa-Gevaert AG**

**D-5090 Leverkusen 1(DE)**

(72) Erfinder: **Toral, José**
**Stiftsbogen 162**
**D-8000 München 70(DE)**
Erfinder: **Lutz, Gottfried**
**Hauptstrasse 44a**
**D-8031 Seefeld(DE)**
Erfinder: **Brandsetter, Hermann**
**Schaidlerstrasse 25**
**D-8000 München 70(DE)**

(54) **Magnetbandcassette.**

(57) Eine Videocassette besteht aus einem Cassettenoberteil (8) und einem Cassettenunterteil (6), mindestens einer darin befindlichen mit Magnetband bewickelbaren Spule, bei der eine Andruckfeder die Bandspulen (1, 2) in Richtung einer definierten Betriebslage federnd belastet, wobei die Nabe (3) der Bandspulen an ihrer dem Cassettenoberteil zugewandten Seite eine zentrisch angeordnete hülsenförmige Vertiefung (11) besitzt. Erfindungsgemäß sitzt in der Vertiefung eine Schraubenfeder (10), die sich in der Vertiefung federnd abstützt und in deren anderem Ende ein aus abriebfestem Material bestehender Stift (12) steckt, dessen oberes Ende (7) im montierten Cassettenzustand am Cassettenoberteil (8) anliegt.

*FIG. 2*

EP 0 349 822 A2

## Magnetbandcassette

Die Neuerung betrifft eine Magnetbandcassette, insbesondere eine Videocassette, bei der eine Andruckfeder eine oder mehrere Bandspulen in Richtung einer definierten Betriebslage federnd belastet.

Die meisten auf dem Markt befindlichen Videocassetten des VHS- und Beta-Videosystems wie auch 8 mm-Cassetten besitzen Andruckfedern. Dabei werden die meisten koplanar angeordneten Spulen von innerhalb der oberen Gehäusehälfte befestigten, aus Federblech gestanzten und gekrümmten Federn in Richtung der unteren Gehäusehälfte gedrückt. Dadurch wird bei den in entsprechende Abspielgeräte eingelegten Cassetten ein gleichmäßiges Aufliegen der Spulen auf die geräteseitigen Kernaufnahmen und ein ruhiger Lauf der Spulen beim Abspielen des Bandes erreicht. Die Größe, Form und gegebenenfalls die Federkräfte der Andruckfedern sind je nach verwendeten Cassetten, deren Spulen und deren Spulenabständen unterschiedlich ausgestaltet beziehungsweise dimensioniert. Die Enden der Andruckfedern liegen auf einem meist kugelförmig gestalteten Vorsprung der Spulennaben auf. Aus der DE 31 32 582 ist bekannt, daß dieser Vorsprung aus einer Kugel, welche aus einem harten Material beispielsweise Polyoxymethylen (POM) besteht, welche in einer zentrisch angeordneten Vertiefung der Spulennabe eingesetzt ist.

Ein Nachteil dieser aus dem Stand der Technik bekannten Aufbau der Videocassetten ist, daß bei der Montage des Cassettengehäuses die Befestigung der Andruckfeder einen besonderen Arbeitsgang erfordert, ferner der Preis der Federn ihre Lagerhaltung und ihre Prüfung.

Deswegen bestand die Aufgabe, eine Magnetbandcassette der oben genannten gattungsmäßigen Art zu finden, welche einfacher aufgebaut ist sowie einfach zusammenzusetzen ist. Neuerungsgemäß wurde die Aufgabe gelöst mit einer Magnetbandcassette mit den im kennzeichnenden Teil des Anspruchs 1 genannten Merkmalen. Nähere Einzelheiten der Neuerung gehen aus den Unteransprüchen, den Zeichnungen und der Beschreibung hervor.

Nachstehend wird die Neuerung anhand der Zeichnungen näher erläutert und zwar zeigt

Figur 1 eine handelsübliche Videocassette mit Bandspulen und mit der neuerungsgemäßen Andruckvorrichtung für die Bandspulen im Längsschnitt

Figur 2 Einzelheiten der Andruckvorrichtung im Längsschnitt gemäß Figur 1.

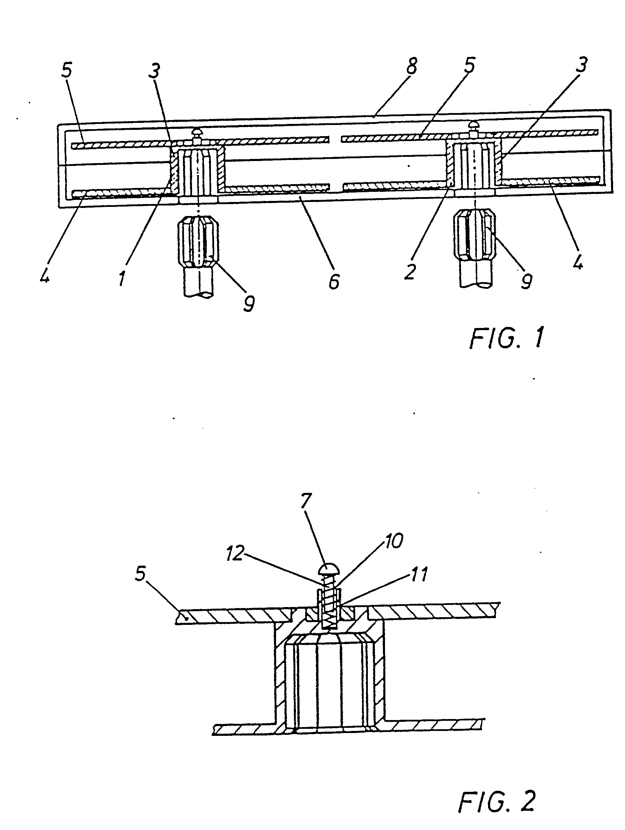

Figur 1 zeigt im Längsschnitt eine Videocassette vom Typ VHS mit eingesetzten koaxial angeordneten Spulen (1, 2). Diese setzen sich aus jeweils einer Wickelnabe (3) zum Aufwickeln des Magnetbandes und zwei Flanschen (4, 5), die am oberen und unteren Ende der Wickelnaben sitzen, zusammen. Der obere Flansch wird vielfach in der Praxis erst nach dem Aufwickeln des Bandes auf die Wickelnabe aufgesetzt. Beim Einsetzen der Cassette in einen Recorder heben die Antriebsspindeln (9), die in die hohlen Wickelnaben von unten eingreifen, die Spulen vom Cassettenboden (6) ab und drücken sie in Richtung des Cassettenoberteils (8). Beim Entnehmen aus dem Gerät werden die Spulen wieder auf dem Cassettenunterteil (6) abgesetzt.

Das Wesen der Neuerung besteht darin, daß die Wickelnabe (3) an ihrer dem Cassettenoberteil zugewandten Seite eine zentrisch angeordnete hülsenförmige Vertiefung (11) besitzt, in der eine Schraubenfeder (10) steckt. Diese stützt sich mit ihrem unteren Ende am Boden der Vertiefung ab, während an ihrem oberen Ende ein aus abriebfestem Material bestehender Stift (12) steckt, dessen oberes Ende im montierten Zustand der Videocassette am Cassettenoberteil (8) anliegt. Dieser Stift (12) ist in einer bevorzugten Ausführung sektkorkenförmig gestaltet und stützt sich mit seinem abgerundeten Kopf (7) an der Innenseite des Cassettenoberteils (8) ab. Die Abstützstelle kann entweder das undurchsichtige Cassettengehäuse oder das Sichtfenster sein. Dabei kann zur Vermeidung von Abrieb an dieser Stelle ein Plättchen aus abriebfestem Material aufgeklebt sein.

Der Stift (12) besteht bevorzugt aus hartem Kunststoff beispielsweise Polyoxymethylen, während der restliche Spulenkörper wie üblich aus einem Acrylnitril-Butadien-Styrol-Copolymerisat (ABS) besteht.

Die vorstehende Beschreibung macht deutlich, daß die neuerungsgemäße Andruckvorrichtung sehr einfach herzustellen und zu montieren ist. Der POM-Stift wird in das eine Ende der Schraubenfeder eingesteckt, bis er mit seinem abgerundeten Kopf auf der zweckmäßigerweise verjüngten Öffnung des Federendes aufsitzt. Daraufhin kann die Feder mit dem POM-Stift in den Vorsprung der Wickelnabe eingesteckt werden, in dem sie federnd festsitzt. Die weitere Montage der Video-Cassette geschieht wie üblich in vorhandenen Montageautomaten.

Die Herstellungskosten der neuerungsgemäßen Videocassette lassen sich mit den beschriebenen Merkmalen deutlich reduzieren und bedingen keine wesentlichen Änderungen bei bestehenden Spritzguß-Werkzeugen für die Cassettenteile. Auch ist es nicht erforderlich, die vorhandenen Montageautomaten durch andere Typen zu ersetzen.

## Ansprüche

1. Magnetbandcassette, insbesondere Videocassette, bestehend aus einem Cassettenoberteil (8) und einem Cassettenunterteil (6), mindestens einer darin befindlichen mit Magnetband bewickelbaren Spule, bei der eine Andruckfeder die Bandspulen (1, 2) in Richtung einer definierten Betriebslage federnd belastet, wobei die Nabe (3) der Bandspulen an ihrer dem Cassettenoberteil zugewandten Seite eine zentrisch angeordnete hülsenförmige Vertiefung (11) besitzt, dadurch gekennzeichnet, daß in der Vertiefung eine Schraubenfeder (10) sitzt, die sich in der Vertiefung federnd abstützt und in deren anderem Ende ein aus abriebfestem Material bestehender Stift (12) steckt, dessen oberes Ende (7) im montierten Cassettenzustand am Cassettenoberteil (8) anliegt.

2. Magnetbandcassette nach Anspruch 1, dadurch gekennzeichnet, daß der Stift (12) sektkorkenförmig gestaltet ist und mit seinem abgerundeten Kopf (7) am Cassettenoberteil (8) anliegt.

3. Magnetbandcassette nach den Ansprüchen 1 bis 2, dadurch gekennzeichnet, daß der Stift aus Polyoxymethylen besteht und der restliche Spulenkörper aus einem Acrylnitril-Butadien-Styrol-Copolymerisat (ABS) zusammengesetzt ist.

4. Magnetbandcassette nach den Ansprüchen 1 bis 3, dadurch gekennzeichnet, daß die Abstützstelle des Stiftes am Cassettenoberteil aus abriebfestem Material besteht.

FIG. 1

FIG. 2